# EUROPÄISCHE PATENTSCHRIFT

(11) **EP 4 150 572 B1**
(45) Veröffentlichungstag und Bekanntmachung des Hinweises auf die Patenterteilung: **24.09.2025**
(21) Anmeldenummer: 21729213.5
(22) Anmeldetag: 10.05.2021
(51) Int. Cl.: G06T 7/00, G01N 23/00

(54) **COMPUTERIMPLEMENTIERTES VERFAHREN ZUR OPTIMIERUNG EINER ERMITTLUNG VON MESSDATEN EINES OBJEKTS**
COMPUTER-IMPLEMENTED METHOD FOR OPTIMISING A DETERMINING OF MEASUREMENT DATA OF AN OBJECT
PROCÉDÉ MIS EN OEUVRE PAR ORDINATEUR POUR OPTIMISER UNE DÉTERMINATION DE DONNÉES DE MESURE D'UN OBJET

(30) Priorität: 11.05.2020 DE 102020112652
(43) Veröffentlichungstag der Anmeldung: 22.03.2023
(73) Patentinhaber: Volume Graphics GmbH, 69115 Heidelberg (DE)
(72) Erfinder: FLESSNER, Matthias, 69115 Heidelberg (DE); FUCHS, Patrick, 69115 Heidelberg (DE)
(74) Vertreter: Patentanwälte Olbricht Buchhold Keulertz
(86) Internationale Anmeldenummer: PCT/EP2021/062287
(87) Internationale Veröffentlichungsnummer: WO 2021/228748

(56) Entgegenhaltungen:
- DE-A1- 102017 100 594

## Beschreibung

Die Erfindung betrifft ein computerimplementiertes Verfahren zur Optimierung einer Ermittlung von Messdaten eines Objekts.

Bei der Produktion von Objekten, wie z. B. Bauteilen bzw. Werkstücken, werden die Objekte gemäß einer Nominalgeometrie hergestellt. Allerdings führen Fertigungstoleranzen und Ungenauigkeiten bei der Produktion dazu, dass die Objekte von der Nominalgeometrie abweichen und in ihrem Inneren Defekte aufweisen können. Daher werden die Objekte entweder stichprobenartig oder generell geprüft. Eine Prüfung der produzierten Objekte kann mittels einer Messung der Objekte durchgeführt werden, um z. B. zu erfassen, ob die Maße des gemessenen Objekts innerhalb des Fertigungstoleranzen liegen.

Die Messung kann dabei berührungslos durchgeführt werden, indem bildverarbeitende Verfahren verwendet werden. Weiter kann z. B. mit durchstrahlenden Messungen das Innere des Objekts untersucht werden. Bei derartigen Messungen werden regelmäßig meist recht generische bzw. unspezifische Aufnahmeparameter bei der Aufnahme der Messdaten und Auswertealgorithmen bei der Auswertung der Messdaten verwendet, obwohl sich Messaufgaben, z. B. Geometrie und Material des Messobjekts und die durchzuführenden Messaufgaben inkl. der relevanten Toleranzen, stark voneinander unterscheiden. Stattdessen werden die generischen bzw. unspezifischen Aufnahmeparameter für eine große Bandbreite an unterschiedlichen Messaufgaben verwendet. Dabei ist die Vorgabe, dass diese Aufnahmeparameter für alle durchzuführenden Messaufgaben möglichst gute Ergebnisse erreichen.

In dem Dokument D1 (DE102017100594A1) ist folgendes offenbart: Die Erfindung bezieht sich auf eine Anordnung und ein Verfahren zur automatischen oder halbautomatischen Bestimmung von Einstellparametern für eine Computertomografie auf der Basis zumindest einer Modellgleichung für die computertomografische Bestimmung zumindest einer dimensionellen Messgröße, wobei in der oder den Modellgleichungen zumindest einige der Geräteparameter des zur Messung eingesetzten Computertomografen berücksichtigt werden Dabei werden in der oder den Modellgleichungen einzuhaltende Vorgabeparameter berücksichtigt, zu denen zumindest die die eine oder mehrere Messaufgaben beschreibenden Messaufgaben-Parameter zählen, wobei durch Simulation und/oder mathematische Berechnung auf Basis der einen oder mehreren Modellgleichungen und/oder computertomografische Testmessungen im verfügbaren Parameterraum der Einstellparameter die Einstellparameter bestimmt werden, für die zumindest ein Zielparameter optimiert wird und/oder der Zielparameter einen Grenzwerte unterschreitet oder überschreitet.

Aufgabe der Erfindung ist es, ein computerimplementiertes Verfahren bereitzustellen, das bessere Ergebnisse für die durchzuführenden Messaufgaben erreicht.

Hauptmerkmale der Erfindung sind in den Ansprüchen 1 und 8 angegeben. Ausgestaltungen sind Gegenstand der Ansprüche 2 bis 7.

Die Erfindung betrifft in einem Aspekt ein computerimplementiertes Verfahren zur Optimierung einer Ermittlung von Messdaten eines Objekts gemäss Anspruch 1.

Mit der Erfindung werden die Aufnahmeparameter aufgabenspezifisch optimiert, bevor eine Messung des Objekts durchgeführt wird. Dies bewirkt weiter eine Optimierung der Auswerteverfahren zur Durchführung der Messaufgabe. Für jede Messaufgabe wird damit zunächst ein eigener Aufnahmeparameter ermittelt, der spezifisch für diese Messaufgabe optimiert wird. Es kann zum Beispiel eine von den Aufnahmeparametern umfasste Trajektorie, die eine Messvorrichtung zur Messung des Objekts verwendet, so ausgestaltet werden, dass sie optimal für diese Messaufgabe ausgestaltet ist. Dies kann zum Beispiel bedeuten, dass die für die Messaufgabe relevanten Geometrien des Objekts lediglich mit einer Genauigkeit aufgenommen werden, die gerade ausreichend für eine aussagekräftige und dennoch schnelle Auswertung ist. Anstatt Messdaten mit maximaler Auflösung zu ermitteln kann dabei zum Beispiel, ggf. lokal, eine geringere Auflösung verwendet werden, wenn das zugrundeliegende Auswerteverfahren mit der geringeren Auflösung näherungsweise gleich gute Ergebnisse liefert, wie mit der hohen Auflösung. In diesem Fall kann, da eine höhere Auflösung in der Regel zeitintensiver ist, eine Zeitersparnis für die Ermittlung der Messdaten erreicht werden. Weiter können die von den Aufnahmeparametern umfassten Einstelloptionen, mit denen die Eigenschaften der Vorrichtung zur Messung des Objekts verändert werden können, auf die Messaufgabe optimiert werden. So kann zum Beispiel die Vorrichtung zur Messung des Objekts so eingestellt werden, dass die Geometrien, die für die Messaufgabe relevant sind, mit einer gerade für die Messaufgabe ausreichenden Genauigkeit abgebildet werden. Dies bewirkt eine weitere Zeitoptimierung der Ermittlung von Messdaten des Objekts, ohne große Einbußen bei der Aussagekraft der Ergebnisse des Auswerteverfahrens. Es findet damit zunächst eine Optimierung der Aufnahmeparameter statt, um die ermittelten Messdaten möglichst optimal auf die Messaufgabe anzupassen. Dabei ist zu berücksichtigen, dass die Optimierung der Aufnahmeparameter nicht unbedingt meint, dass die ermittelten Messdaten die beste Qualität haben. Vielmehr zielt die Optimierung der Aufnahmeparameter darauf ab, die Aufnahmeparameter so zu wählen, dass die Messdaten, die basierend auf den Aufnahmeparametern aufgenommen werden, gerade so eine Mindestqualität aufweisen, um aussagekräftige Ergebnisse mittels des der Optimierung der Aufnahmeparameter zugrundeliegenden Auswerteverfahrens zu erhalten. Dies kann zum Beispiel bedeuten, dass Aufnahmeparameter gesucht werden, mit denen die Messaufgabe mit der geforderten Genauigkeit in der kürzesten Zeit und/oder mit der geringsten Anzahl von Messgeometrien durchgeführt werden kann. Damit sei jedoch nicht ausgeschlossen, dass auch Aufnahmeparameter gesucht werden können, mit denen die Messaufgabe in einer definierten Zeit und/oder mit einer definierten Anzahl von Messgeometrien mit der höchsten Genauigkeit durchgeführt werden können. Wenn durchstrahlende Messungen, zum Beispiel mit Röntgenstrahlung, durchgeführt werden, können die optimierten Aufnahmeparameter alternativ oder zusätzlich eine Minimierung der verwendeten Strahlendosis bewirken. Es sind jedoch auch Kombinationen dieser Ziele möglich. Nach der Optimierung der Aufnahmeparameter wird mittels einer Vorrichtung zur Messung des Objekts eine Messung des Objekts durchgeführt. Die auf diese Weise ermittelten Messdaten werden danach von einem Auswerteverfahren zum Auswerten der geometrischen Eigenschaften des Objekts verwendet. Das computerimplementierte Verfahren bewirkt verbesserte Ergebnisse für die durchzuführenden Messaufgaben. Weitere Vorteile bewirkt die Erfindung, wenn eine Vielzahl von Objekten mit gleicher Nominalgeometrie, die hinsichtlich der gleichen Merkmale geprüft werden, der sogenannten Messaufgabe, sehr häufig analysiert werden. Dies ist beispielsweise bei einer fertigungsbegleitenden Inline-Prüfung der Fall, bei der mit der Erfindung eine große Zeitersparnis bei verbesserten Ergebnissen für die durchzuführenden Messaufgaben bewirkt wird. Die gleiche Messaufgabe mit den gleichen Toleranzvorgaben kann somit in einer geringeren Zeit durchgeführt werden. Dies spart wertvolle Maschinenzeit bzw. erhöht die Maschinenkapazität.

Eine Optimierung kann zum Beispiel weiter bedeuten, dass ein wissensbasiertes System oder eine künstliche Intelligenz anhand der Messaufgaben bestimmte Aufnahmeparameter vorschlägt. Dabei können auch Simulationen, die die Aufnahmeparameter verwenden, durchgeführt werden, um die Optimierung zu beurteilen. Dabei kann zum Beispiel ein erstes Auswerteverfahren die Messdaten aufwerten und die Ergebnisse der Auswertung mit Referenzwerten vergleichen, die zum Beispiel eine Ground Truth, die aus der simulierten Geometrie abgeleitet wurden, sein können. Aus dieser Auswertung kann zum Beispiel ein typischer Messfehler für die Ermittlung der Messdaten abgeleitet werden, der für die Beurteilung der Aufnahmeparameter verwendet werden kann. Das Auswerteverfahren, das hierfür verwendet wird, kann bereits mit optimierten Aufnahmeparametern Arbeiten oder selbst mittels der optimierten Aufnahmeparameter dahingehend optimiert worden sein, dass Messdaten mit geringer Qualität, zum Beispiel, wenn eine geringe Anzahl von Messgeometrien verwendet wurde, möglichst gute bzw. stabile Ergebnisse erreicht. Dabei können beispielsweise weiter andere Verfahren verwendet werden, die keine Simulationen verwenden und die Optimierung auf Grundlage eines vorläufigen Auswerteverfahrens ausführen.

Die Messaufgabe kann eine oder mehrere Analysen umfassen bzw. benötigen. Beispiele für die Analysen können sein: eine Defektanalyse in 3D oder 2D; eine Einschlussanalyse in 3D oder 2D; eine Oberflächen- bzw. Grenzflächenbestimmung, die beispielsweise für eine Analyse aus dem Gebiet dimensionelle Messtechnik verwendet wird, wobei eine Grenzfläche auch eine Oberfläche, die einen Übergang von Material zu Luft begrenzt, sein kann und eine Grenzfläche zwischen zwei Materialien des Messobjekts analysiert wird, z. B. bei Multimaterial-Objekten; eine Analyse von geometrischen Eigenschaften wie Maß, Form, Lage, Welligkeit oder Rauheit; eine Analyse von Fasern bzw. Faserstrukturen, sowohl geometrischer Eigenschaften von Fasern, die einzeln segmentiert werden können, als auch Analysen von Fasern, deren Durchmesser unter der Auflösungsgrenze des Messsystems sind, die als Verbund aber noch z. B. bzgl. ihrer Orientierung analysiert werden können; eine Analyse von Eigenschaften von Pulvern z. B. Durchmesser, Volumen, Oberfläche von Körnern; eine Identifizierung von Fehlerbildern jeglicher Art, z. B. unaufgeschmolzenes Pulver in der additiven Fertigung oder Risse, und/oder eine Analyse jeglicher Materialeigenschaften z. B. Dichte.

Weiterhin können mehrere Aufnahmeparameter hinsichtlich mehrerer Analysen gleichzeitig optimiert werden.

Die Messaufgabe kann auch für Multimaterial-Objekte definiert sein, was insbesondere vorteilhaft für die Grenzflächenbestimmung ist, da gemäß dem Stand der Technik diese erschwert ist.

Die Messaufgabe kann auf definierten Teilbereichen des Objekts definiert sein, so dass die Analysen nur dort durchgeführt werden müssen. In diesem Fall kann es für die Optimierung auch sinnvoll sein, sich auf diese Bereiche zu beschränken bzw. diese zu bevorzugen.

Bei einer axialen Computertomographie werden Projektionen in äquidistanten Winkelschritten aufgenommen, wobei für alle Projektionen die gleichen Einstelloptionen gewählt werden. In diesem Beispiel können somit z. B. folgende, ggf. globale, Aufnahmeparametern optimiert werden: Anzahl der Projektionen, Orientierung des Bauteils bzgl. der Aufnahmegeometrie bzw. Strahlengang, geometrische Vergrößerung, Einstelloptionen wie Röhrenspannung, Röhrenstrom, Belichtungszeit. Dies hat den Vorteil, dass nur eine geringe Anzahl von Aufnahmeparametern optimiert werden muss.

Im Beispiel der Roboter-Computertomographie, in denen die Messgeometrien als Durchstrahlungsgeometrien frei gewählt werden können, können diese Aufnahmeparameter quasi für jede Projektion einzeln optimiert werden. Dabei werden zusätzlich die Durchstrahlungsgeometrien der einzelnen Projektionen und die Anzahl der Projektionen optimiert. Dies ermöglicht mehr Möglichkeiten für die Optimierung, erhöht aber aufgrund der größeren Anzahl der Aufnahmeparameter auch den benötigten Aufwand.

Die Messung kann z. B. eine optische Messung, wie z. B. eine Streifenprojektion oder Photogrammetrie, oder eine durchstrahlende Messung, wie z. B. eine Computertomographie, Radiographie oder Ultraschallmessung, oder einen taktilen Sensor z. B. mit Hilfe eines Tasters umfassen.

Die Messgeometrie kann im Fall der optischen Messungen z. B. die Betrachtungsrichtung eines optischen Sensors in Bezug auf das gemessene Objekt beschreiben. Im Fall einer durchstrahlenden Messung kann die Messgeometrie eine Durchstrahlungsgeometrie sein, die das räumliche Verhältnis zwischen der Strahlungsquelle, dem Objekt und dem Strahlungsdetektor beschreibt. Die Messgeometrie beschreibt in diesem Fall die Richtung, in der das Objekt durchstrahlt wird, aber auch die Position des durchstrahlten Bereichs und die Vergrößerung. Beschreiben lässt sich dies mit Hilfe von neun geometrischen Freiheitsgraden: für die Translation jeweils drei Freiheitsgrade für die Strahlungsquelle und den Strahlungsdetektor und für die Rotation drei Freiheitsgrade für den Strahlungsdetektor. Eine Durchstrahlungsgeometrie kann bzgl. des gemessenen Objekts und/oder bzgl. der Vorrichtung zur Messung des Objekts definiert sein. Im Fall einer taktilen Messung kann die Messgeometrie z. B. die Antastrichtung oder die Ausrichtung des zu messenden Objekts im Messvolumen beschreiben.

Die Messung eines Objekts kann dabei im Fall einer durchstrahlenden Messung die Aufnahme einzelner oder mehrerer Durchstrahlungsbilder bzw. Projektionen des Objekts bedeuten. Im Fall einer optischen Messung kann eine Messung eines Objekts die Aufnahme einzelner oder mehrerer Bilder des Objekts mit einer Messkamera bzw. einem optischen Sensor bedeuten. Im Fall eines taktilen Sensors kann eine Messung eines Objekts die Erfassung einzelner oder mehrerer Messpunkte an dem Objekt bedeuten.

Einstelloptionen können im Fall von Computertomographie z. B. Spannung und Strom einer Röntgenröhre oder die Belichtungszeit sein, die sich auch bezüglich der einzelnen Durchstrahlungsbilder unterscheiden können. Im Fall von Photogrammetrie kann eine Einstelloption eine Belichtungszeit einer Kamera sein. Im Fall von Streifenprojektion kann eine Einstelloption zusätzlich z. B. ein auf das zu messende Objekt projizierte Muster sein. Im Fall eines taktilen Sensors kann eine Einstelloption z. B. eine Antastkraft sein.

Für die Durchführung einer Messung mit optimierten Messgeometrien bzw. Aufnahmeparametern kann das Objekt z. B. in einer entsprechenden Halterung platziert werden, die eine definierte Pose des Objekts sicherstellt. Alternativ oder zusätzlich kann aus den zuerst ermittelten Messdaten die Pose des Objekts ermittelt werden und entsprechend von der Vorrichtung zur Messung des Objekts die gewünschten Durchstrahlungsgeometrien angefahren werden. Damit wird sichergestellt, dass die Messdaten des Objekts mit den gewünschten Messgeometrien aufgenommen werden.

Gemäß einem Beispiel kann der Schritt: Optimieren des mindestens einen Aufnahmeparameters für die mindestens eine Messaufgabe, weiter den folgenden Unterschritt aufweisen: Bereitstellen eines Satzes vordefinierter Messgeometrien; Auswählen einer Untermenge des Satzes vordefinierter Messgeometrien basierend auf der Messaufgabe.

Mit dem Satz vordefinierter Messgeometrien können, insbesondere bei einer durchstrahlenden Messung, Messgeometrien ausgewählt werden, die für das betrachtete Objekt und in Bezug auf das der Optimierung der Aufnahmeparameter zu Grunde liegende Auswerteverfahren voraussichtlich passende Aufnahmeparameter aufweist. Damit kann die Optimierung der Aufnahmeparameter beschleunigt werden, da bereits die anfangs für die Optimierung verwendeten Aufnahmeparameter günstig sind. Weiterhin können dies Messgeometrien sein, für welche die Messvorrichtung bereits eingemessen bzw. kalibriert ist, so dass unter Verwendung dieser Messgeometrien eine erhöhte Genauigkeit der Messergebnisse ermöglicht.

Dabei können beispielsweise Messgeometrien ausgelassen werden, die für das Auswerteverfahren nicht relevant sind. Alternativ oder zusätzlich kann z. B. die kleinste Anzahl bzw. Untermenge der bestehenden Messgeometrien ausgesucht werden, bei denen die Messaufgabe noch erfüllt werden kann.

Gemäß einem anderen Beispiel kann das Verfahren nach dem Schritt Ermitteln der Messdaten für das Objekt weiter den nachfolgenden Schritt aufweisen: Ermitteln einer digitalen dreidimensionalen Objektdarstellung aus den Messdaten; wobei der Schritt Durchführen der mindestens einen Messaufgabe den nachfolgenden Unterschritt aufweist: Analysieren der digitalen Objektdarstellung auf Basis der Messaufgabe.

Dies kann bei einer durchstrahlenden Messung in Form einer Computertomographie eine Rekonstruktion der Volumendaten aus Projektionsdaten bzw. Durchstrahlungsbildern sein. Im Zusammenhang mit den Unterschritten Bereitstellen eines Satzes vordefinierter Messgeometrien und Auswählen einer Untermenge des Satzes vordefinierter Messgeometrien basierend auf der Messaufgabe können die optimierten Messgeometrien abhängig von der Messaufgabe äquidistant oder nicht-äquidistant sein. Eine äquidistante Messgeometrie kann z. B. für eine axiale Computertomographie vorteilhaft sein, da dann die weiter verbreitete gefilterte Rückprojektion weiterhin für eine Rekonstruktion von der digitalen dreidimensionalen Objektdarstellung, sogenannten Volumendaten, genutzt werden kann. Nicht-äquidistante Messgeometrien können verwendet werden, wenn z. B. ein iterativer Algorithmus die Volumendaten rekonstruiert. Die Einstelloptionen der einzelnen Messgeometrien werden dabei typischerweise konstant gelassen bzw. nicht variiert.

Bei einer optischen Messung kann die dreidimensionale Objektdarstellung eine Darstellung der Oberfläche bzw. einer Grenzfläche des Objekts sein, welche anhand der von der Messkamera aufgenommenen Bilder errechnet wird.

Weiter kann der Schritt Optimieren des mindestens einen Aufnahmeparameters mittels mindestens einer simulierten durchstrahlenden Messung des Objekts durchgeführt werden.

In diesem Beispiel wird eine Durchstrahlung einer Geometrie mit definierten Aufnahmeparametern nachgebildet. Ergebnis sind meist virtuelle Durchstrahlungsbilder, die mit den bei den realen durchstrahlenden Messungen verwendeten Verfahren, z. B. einer Rekonstruktion und/oder Auswerteverfahren ausgewertet werden können. Eine solche Durchstrahlungssimulation kann z. B. auf Ray-Tracing, auf Monte-Carlo-Methoden basieren oder auf einer Bild-basierten Vorwärtsprojektion beruhen.

Die Messaufgabe kann zum Beispiel mindestens eine Defektanalyse zur Ermittlung und Analyse von möglichen Defekten im Objekt umfassen, wobei die Messung als eine durchstrahlendende Messung durchgeführt wird.

Weiter können für jede der Analysen jeweils Mindestanforderungen für die Analysen bzw. für die Analyseergebnisse definiert sein, die mit dem optimierten Aufnahmeparameter noch erreicht werden müssen. Es kann beispielsweise eine Mindestgenauigkeit definiert sein, mit der ein geometrischer Parameter ermittelbar sein muss. Ein weiteres Beispiel kann eine Mindestsicherheit sein, mit der eine kritische Eigenschaft im Objekt ermittelbar sein muss.

Weiter kann der Schritt Optimieren des mindestens einen Aufnahmeparameters für die mindestens eine Messaufgabe zum Beispiel weiter mindestens einen der nachfolgenden Unterschritte aufweisen, wobei die Messung eine durchstrahlende Messung ist: Ändern des mindestens einen Aufnahmeparameters bis jeder Defekt im Objekt, der eine vordefinierte Mindestgröße aufweist, mit einer Wahrscheinlichkeit erkannt wird, die innerhalb eines vordefinierten Wahrscheinlichkeitsintervalls für Defekte liegt; Ändern des mindestens einen Aufnahmeparameters bis geometrische Parameter der Defekte im Objekt mit einer Wahrscheinlichkeit, die innerhalb eines vordefinierten Wahrscheinlichkeitsintervalls für geometrische Parameter liegt, mit einer vordefinierten Mindestgenauigkeit für Defekte ermittelt werden.

Da eine Wahrscheinlichkeit, dass alle Defekte erkannt werden, bisher nicht 100% erreichen kann, können in diesem Beispiel Wahrscheinlichkeitsintervalle angegeben werden, in denen die Wahrscheinlichkeit, dass jeder Defekt im Objekt erkannt wurde, liegen muss. Das Wahrscheinlichkeitsintervall kann so definiert sein, dass beispielsweise ein Defekt der definierten Größe zu 95 %, d. h. z. B. bei 19 von 20 Messungen, entdeckt werden muss. Dies wird dann als sicher angesehen.

Die Mindestgröße kann lokal, ggf. variierend, definiert sein. Zur Beurteilung, ob bei gegebenen, ggf. optimierten, Aufnahmeparametern Defekte der entsprechenden Mindestgröße sicher identifiziert werden können, können beispielsweise reale und/oder simulierte Testmessungen durchgeführt werden. Daraus kann mit Hilfe von Monte-Carlo-Methoden die Wahrscheinlichkeit ermittelt werden, dass Defekte an einer definierten Stelle und einer definierten Größe identifiziert werden. Bei simulierten Messungen kann die Eingangsgeometrie der Simulation bzw. der simulierten Defekte als Referenz bzw. Ground Truth verwendet werden. Weiter kann dies anhand von Eigenschaften der Volumendaten, z. B. Rauschlevel und Auflösung, ermittelt werden. Je größer das Rauschlevel und je schlechter die Auflösung ist, desto unwahrscheinlicher wird es, kleine Defekte korrekt zu identifizieren. In einem weiteren Beispiel kann das Auswerteverfahren. beispielsweise ein künstliches neuronales Netz, trainieren werden, selbst eine entsprechende Vorhersage der Zuverlässigkeit der Analyseergebnisse zu treffen.

Weiter kann die Messaufgabe beispielsweise mindestens eine Bestimmung einer Grenzfläche des Objekts aufweisen.

Weiter können für die Bestimmung der Grenzfläche des Objekts jeweils Mindestanforderungen definiert sein, die mit dem optimierten Aufnahmeparameter noch erreicht werden müssen. Es kann beispielsweise eine Mindestgenauigkeit für die Bestimmung der Grenzfläche bzw. deren Position definiert sein. Ein weiteres Beispiel kann eine Mindestsicherheit sein, mit der die Grenzfläche ermittelbar bzw. identifizierbar sein muss.

Bei allen oben genannten Beispielen kann alternativ oder zusätzlich eine Analyse von Eigenschaften von Fasern oder Faserstrukturen im Objekt durchgeführt werden.

Der Schritt Optimieren des mindestens einen Aufnahmeparameters für die mindestens eine Messaufgabe kann gemäß einem anderen Beispiel weiter mindestens einen der nachfolgenden Unterschritte aufweisen: Ändern des mindestens einen Aufnahmeparameters bis Grenzflächen im Objekt mit einer Wahrscheinlichkeit, die innerhalb eines vordefinierten Wahrscheinlichkeitsintervalls für Grenzflächen liegt, mit einer vordefinierten Mindestgenauigkeit für die Grenzflächen ermittelt werden.

Die Mindestgenauigkeit kann auch für Grenzflächen definiert sein. Da wie oben bereits erläutert eine Wahrscheinlichkeit bisher nicht 100% erreichen kann, können in diesem Beispiel Wahrscheinlichkeitsintervalle angegeben werden, in denen die Wahrscheinlichkeit, dass jede Grenzfläche im Objekt mit einer vordefinierten Mindestgenauigkeit ermittelt wurde, liegen muss. Das Wahrscheinlichkeitsintervall kann so definiert sein, dass beispielsweise in einem betrachteten Grenzflächenbereich die wahre Grenzfläche zu 95 %, d. h. z. B. bei 19 von 20 Messungen höchstens mit einem Wert, der der Mindestgenauigkeit entspricht, entfernt von der ermittelten Grenzfläche liegt. Dies wird dann als sicher angesehen. Die Mindestgenauigkeit kann lokal, ggf. variierend, definiert sein.

Zur Beurteilung, wie genau bei gegebenen, ggf. optimierten, Aufnahmeparametern die lokalen Genauigkeiten der Grenzflächen ermittelt werden können, können beispielsweise reale und/oder simulierte Testmessungen durchgeführt werden. Daraus kann mit Hilfe von Monte-Carlo-Methoden die Wahrscheinlichkeit ermittelt werden, dass lokale Genauigkeit an einer definierten Stelle und einer definierten Größe identifiziert werden. Bei simulierten Messungen kann die Eingangsgeometrie der Simulation bzw. der simulierten lokalen Genauigkeit als Referenz bzw.

Ground Truth verwendet werden. Weiter kann dies anhand von Eigenschaften der Volumendaten, z. B. Rauschlevel und Auflösung, ermittelt werden. Je größer das Rauschlevel ist, desto geringer ist die lokale Genauigkeit der Grenzfläche. Bei einer schlechten Auflösung wird die Genauigkeit in Grenzflächenbereichen von kleinen Strukturen beeinträchtigt. In einem weiteren Beispiel kann das Auswerteverfahren, beispielsweise ein künstliches neuronales Netz, trainiert werden, selbst eine entsprechende Vorhersage der Zuverlässigkeit der Analyseergebnisse zu treffen.

Geometrische Parameter können z. B. das Defektvolumen oder der, ggf. zu einer Kugel gleichen Volumens äquivalente, Durchmesser eines Defekts sein.

Die Mindestgenauigkeit kann auch für Defekte einer bestimmten Größe definiert sein, z. B. als ein Volumen von Defekten aus dem Bereich 200 µm³ bis 300 µm³, das auf 10 % genau ermittelbar sein soll. Da wie oben bereits erläutert eine Wahrscheinlichkeit bisher nicht 100% erreichen kann, können entsprechende Wahrscheinlichkeitsintervalle definiert werden, z. B. das in 95 % bzw. 19 von 20 Fällen die Messabweichung des Defektvolumens maximal 10 % ist. Die Mindestgenauigkeit kann lokal (auch variierend) definiert sein.

Zur Beurteilung, wie genau bei gegebenen, ggf. optimierten, Aufnahmeparametern die geometrischen Parameter ermittelt werden können, können auch hier beispielsweise reale und/oder simulierte Testmessungen durchgeführt werden. Hieraus kann mit Hilfe von Monte-Carlo-Methoden die lokale Genauigkeit der Bestimmung der geometrischen Parameter ermittelt werden. Bei simulierten Messungen kann die Eingangsgeometrie der Simulation bzw. der simulierten Defekte als Referenz bzw. Ground Truth verwendet werden. Weiterhin kann die lokale Genauigkeit anhand von Eigenschaften der Volumendaten, z. B. Rauschlevel und Auflösung, ermittelt werden. Je größer das Rauschlevel ist, desto geringer ist typischerweise die lokale Genauigkeit der Bestimmung der geometrischen Parameter. Kleinere Defekte sind insbesondere bei einer schlechten Auflösung nur ungenau erfassbar. In einem weiteren Beispiel kann das Auswerteverfahren, beispielsweise ein künstliches neuronales Netz, darauf trainiert werden, selbst eine entsprechende Vorhersage der Zuverlässigkeit der Analyseergebnisse zu treffen.

In allen oben genannten Beispielen, können anstatt oder zusätzlich zu künstlichen neuronalen Netzen andere Verfahren der künstlichen Intelligenz bzw. des Machine Learnings eingesetzt werden, z. B., Deep Learning, Support Vector Machines, Bayes-Klassifikator, Nächste-Nachbarn-Klassifikation, Random Forest, Support Vector Machine, usw.

Weiter kann das Verfahren in einem weiteren Beispiel nach dem Schritt Ermitteln der Messdaten für das Objekt weiter den folgenden Schritt aufweisen: Optimieren des Auswerteverfahrens unter Verwendung von Messdaten, die mittels einer Messung unter Verwendung des mindestens einen optimierten Aufnahmeparameters ermittelt wurden, als Trainingsdaten.

Diese Optimierung des Auswerteverfahrens ist nicht zu verwechseln mit der Optimierung der Aufnahmeparameter. Auf diese Weise wird das Auswerteverfahren dahingehend trainiert, Messdaten, die mit den optimierten Aufnahmeparametern aufgenommen wurden und die deswegen ihre eigenen bzw. sehr speziellen Charakteristika aufweisen können, möglichst gut auszuwerten. Das Verfahren lernt z. B., wie Defekte in Messungen dieser Aufnahmeparameter abgebildet werden. Dies vereinfacht es für das Verfahren zu unterscheiden, ob es sich bei einer Auffälligkeit in den Daten um einen Bildfehler, der durch die geringe Qualität der Messdaten verursacht werden kann, oder um eine reale Geometrie bzw. Eigenschaft des Bauteils handelt, z. B. um einen Defekt. Dies ermöglicht es, die Analyse trotz geringer bzw. lokal stark unterschiedlicher Datenqualitäten erfolgreich durchzuführen.

Die Optimierung des Auswerteverfahren wird üblicherweise mit Hilfe von lernfähigen Verfahren durchgeführt, die Trainingsdaten inkl. Ground Truth benötigen. Ausgangspunkt dieser Optimierung kann ein bereits oben erläutertes Auswerteverfahren sein. Alternativ kann ein anderes Verfahren verwendet werden, beispielsweise die oben genannten Verfahren der künstlichen Intelligenz bzw. des Machine Learning. Ergebnis der Optimierung ist ein optimiertes Auswerteverfahren.

Diese Trainingsdaten können z. B. durch reale Messungen oder durch Simulationen erzeugt werden. Bei realen Messungen kann die Ground Truth durch eine Referenzmessung, z. B. optisch erfasste Schliffbilder oder eine Computertomographie-Messung sehr hoher Qualität, ermittelt werden. Bei simulierten Messungen kann hier die Eingangsgeometrie der Simulation verwendet werden.

Damit das Auswerteverfahren nicht zu sehr auf eine spezifische Messaufgabe ausgerichtet wird, können zum Beispiel Messungen des Objekts mit abweichenden bzw. nicht-optimierten Aufnahmeparamatern in den Trainingsdaten berücksichtigt werden.

Bei dem zu optimierenden Auswerteverfahren kann es sich wiederum um die im Anspruch 1 genannten handeln.

Vorzugsweise wird die Auswertung optimiert, die auch bereits als Grundlage bzw. als Maß für die Optimierung der Aufnahmeparameter verwendet wurde.

Die Optimierung des Auswerteverfahrens bedeutet, dass das Auswerteverfahren so geändert wird, dass die Messaufgaben auf den Trainingsdaten möglichst gut erfüllt werden.

Möglichst gut erfüllen kann dabei z. B. bedeuten, dass möglichst alle Defekte erkannt werden, ohne zu viele Fehler erster und zweiter Art zu verursachen, oder dass die Grenzfläche mit möglichst hoher Genauigkeit ermittelt werden kann.

Um eine Überanpassung, ein sogenanntes Overfitting, an die Trainingsdaten zu vermeiden, können Verfahren zur Regularisierung, z.B. Data Augmentation oder Dropout, angewendet werden.

Um ein möglichst zielführendes Training zu ermöglichen, können im Fall der Defekterkennung Defektgeometrien bzw. Formen, Defektgrößen und Defektverteilungen in den Trainingsdaten verwendet werden, die später zusätzlich bei den zu analysierenden Objekten auftreten können. Das Wissen hierzu kann aus einer Datenbank, z. B. in Abhängigkeit vom Fertigungsprozess wie Druckguss, aus Simulationen des Fertigungsprozesses oder aus bestehenden Messungen abgeleitet werden.

Weiter können die Eigenschaften der Defekte und anderer geometrischer Eigenschaften der Objekte in den Trainingsdaten möglichst variiert werden, um eine Überanpassung der Auswertung zu vermeiden.

Weiter kann die Optimierung von Aufnahmeparametern und Auswerteverfahren auch gleichzeitig durchgeführt werden.

Das Verfahren kann zum Beispiel weiter den folgenden Schritt aufweisen: Optimieren des Auswerteverfahrens unter Verwendung von simulierten Messdaten, die mittels einer Simulation unter Verwendung des mindestens einen optimierten Aufnahmeparameters ermittelt wurden, als Trainingsdaten.

In diesem Beispiel können die gleichen Simulationsmethoden bzw. bereits durchgeführte Simulationen genutzt werden, die auch im Schritt Optimieren des mindestens einen Aufnahmeparameters oder des mindestens einen optimierten Aufnahmeparameters für die mindestens eine Messaufgabe zur Optimierung der Ermittlung von Messdaten verwendet wurden.

Hierbei wird eine Durchstrahlung einer Geometrie mit definierten Aufnahmeparametern nachgebildet. Ergebnis sind meist virtuelle Durchstrahlungsbilder, die entsprechend mit den auch bei den realen Messungen verwendeten Verfahren, z. B. Rekonstruktion und Auswerteverfahren, ausgewertet werden können. Eine solche Durchstrahlungssimulation kann z. B. auf Ray-Tracing oder auf einer Bild-basierten Vorwärtsprojektion beruhen.

Gemäß einem weiteren Beispiel kann das Verfahren weiter den folgenden Schritt aufweisen: Ermitteln eines Wahrscheinlichkeitswerts mittels der Trainingsdaten, der angibt, ob das optimierte Auswerteverfahren einen Defekt einer definierten Größe identifiziert.

Die Ermittlung des Wahrscheinlichkeitswerts kann für die gegebenen Aufnahmeparameter bestimmt werden. Weiter kann dazu ein probability of detection-Diagramm (POD-Diagramm) verwendet werden. Dieses zeigt, in Abhängigkeit von der Größe eines Defekts, z. B. in Anzahl der Voxel oder in Defektvolumen, die Wahrscheinlichkeit für die Erkennung eines Defekts an. Diese Wahrscheinlichkeit ist für extrem kleine Defekte meist 0 und für große Defekte meist 100 %. Wie das POD-Diagramm dazwischen verläuft, kann für eine Einschätzung verwendet werden, ob das Messsystem bzw. die gewählten Aufnahmeparameter, bzw. die Fähigkeiten der Messung inkl. Auswertung, für die Messaufgabe geeignet sind. Die Wahrscheinlichkeit bzw. das POD-Diagramm kann auch für unterschiedliche Bereiche der Messung lokal ermittelt werden. Ein POD-Diagramm kann für verschiedene Messmethoden, die für eine Erkennung von Defekten im Objekt verwendet werden können, definiert werden. Ein solches POD-Diagramm kann bei der Optimierung der Aufnahmeparameter und/oder des Auswerteverfahrens als zu optimierende Größe verwendet werden.

Es kann weiter in einem Beispiel vorgesehen sein, dass das Verfahren weiter den folgenden Schritt aufweist: Optimieren des mindestens einen Aufnahmeparameters oder des mindestens einen optimierten Aufnahmeparameters basierend auf dem optimierten Auswerteverfahren, wobei mindestens ein weiter optimierter Aufnahmeparameter resultiert.

Vor dem Schritt Optimieren des mindestens einen Aufnahmeparameters basierend auf dem optimierten Auswerteverfahren kann eine vordefinierte Abbruchbedingung geprüft werden. Der Schritt Optimieren des mindestens einen Aufnahmeparameters basierend auf dem optimierten Auswerteverfahren wird nur dann durchgeführt, wenn die vordefinierte Abbruchbedingung nicht erfüllt ist. Wenn der Schritt Optimieren des mindestens einen Aufnahmeparameters basierend auf dem optimierten Auswerteverfahren durchgeführt wird, wird demnach das mittels der optimierten Aufnahmeparameter optimierte Auswerteverfahren verwendet, um weiter optimierte Aufnahmeparameter zu ermitteln. Die weiter optimierten Aufnahmeparameter sind dabei in der Regel besser, als die vorher optimierten Aufnahmeparameter. Aufgrund des optimierten Auswerteverfahrens hat sich die Grundlage für die Optimierung geändert. So können z. B. die zu identifizierenden Defekte nun durch das optimierte Auswerteverfahren besser erkannt werden, was eine weitere Optimierung der Aufnahmeparameter, z. B. Verwendung von noch weniger Projektionen, ermöglicht.

Gemäß einem anderen Beispiel kann das Verfahren nach dem Schritt Optimieren des mindestens einen Aufnahmeparameters basierend auf dem optimierten Auswerteverfahren weiter den folgenden Schritt aufweisen: Optimieren des Auswerteverfahrens oder des optimierten Auswerteverfahrens unter Verwendung von Messdaten, die mittels des mindestens einen weiter optimierten Aufnahmeparameters ermittelt wurden, zum Ermitteln eines weiter optimierten Auswerteverfahrens.

Hierbei kann nun das optimierte Auswerteverfahren mittels der weiter optimierten Aufnahmeparameter weiter optimiert werden. Es wird damit ein besseres Auswerteverfahren als das bereits optimierte Auswerteverfahren erhalten. Diese Optimierung kann von dem ursprünglichen Auswerteverfahren oder dem optimierten Auswerteverfahren oder einem komplett anderen Auswerteverfahren ausgehen. D.h., es können mit den weiter optimierten Aufnahmeparametern z. B. bestehende Auswerteverfahren weiter verbessert werden. Alternativ kann mit den weiter optimierten Aufnahmeparametern ein komplett neues Auswerteverfahren verbessert werden, um zu vermeiden, dass die weitere Optimierung zu nah an den bereits optimierten Auswertungsverfahren verbleibt, die auf einer Kurve von optimierten Auswertungsverfahren ein lokales Optimum darstellen könnten.

Weiter kann das Verfahren nach dem Schritt Optimieren des Auswerteverfahrens oder des optimierten Auswerteverfahrens unter Verwendung des mindestens einen optimierten Aufnahmeparameters zum Ermitteln eines weiter optimierten Auswerteverfahrens beispielsweise weiter den folgenden Schritt aufweisen: Prüfen, ob eine vordefinierte Abbruchbedingung erfüllt ist; Wenn die vordefinierte Abbruchbedingung nicht erfüllt ist: Wiederholen der Schritte Optimieren des mindestens einen Aufnahmeparameters basierend auf dem optimierten Auswerteverfahren und Optimieren des Auswerteverfahrens oder des optimierten Auswerteverfahrens unter Verwendung von Messdaten, die mittels des mindestens einen optimierten Aufnahmeparameters ermittelt wurden, zum Ermitteln eines weiter optimierten Auswerteverfahrens bis eine vordefinierte Abbruchbedingung erfüllt ist.

Die Schritte zum Optimieren des Auswerteverfahrens mittels der optimierten Aufnahmeparameter können iterativ durchgeführt werden. Es werden dann wechselweise weiter optimierte Aufnahmeparameter und weiter optimierte Auswerteverfahren ermittelt. Die Wiederholung wird durchgeführt bis ein Abbruchkriterium erreicht wurde, z. B. eine maximale Rechenzeit für die Dauer der Optimierung oder eine Konvergenz der zu optimierenden Aufnahmeparameter oder Auswertealgorithmen.

In einem weiteren Aspekt betrifft die Erfindung ein Computerprogrammprodukt mit auf einem Computer ausführbaren Instruktionen, welche auf einem Computer ausgeführt, den Computer dazu veranlassen, das Verfahren nach der vorhergehenden Beschreibung durchzuführen.

Vorteile und Wirkungen sowie Weiterbildungen des Computerprogrammprodukts ergeben sich aus den Vorteilen und Wirkungen sowie Weiterbildungen des oben beschriebenen Verfahrens. Es wird daher in dieser Hinsicht auf die vorangegangene Beschreibung verwiesen. Unter einem Computerprogrammprodukt kann z. B. ein Datenträger verstanden werden, auf dem ein Computerprogrammelement gespeichert ist, das für einen Computer ausführbare Instruktionen aufweist. Alternativ oder zusätzlich kann unter einem Computerprogrammprodukt beispielsweise auch ein dauerhafter oder flüchtiger Datenspeicher, wie Flash-Speicher oder Arbeitsspeicher, verstanden werden, der das Computerprogrammelement aufweist. Weitere Arten von Datenspeichern, die das Computerprogrammelement aufweisen, seien damit jedoch nicht ausgeschlossen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:

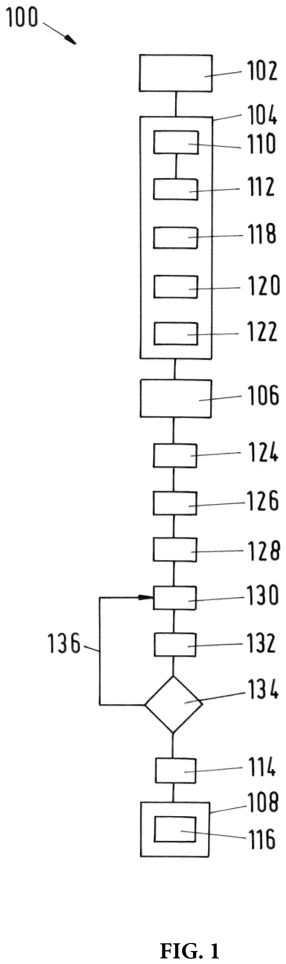

Fig. 1 ein Flussdiagramm eines Beispiels des computerimplementierten Verfahrens.

Im Folgenden wird das computerimplementierte Verfahren zur Optimierung einer Ermittlung von Messdaten eines Objekts mit dem Referenzzeichen 100 bezeichnet, wie in Figur 1 dargestellt.

Messdaten, deren Ermittlung optimiert werden soll, werden mittels einer Messung des Objekts, zum Beispiel mittels einer Vorrichtung zur Messung des Objekts, ermittelt. Die Vorrichtung zur Messung des Objekts verwendet dabei mindestens einen Aufnahmeparameter, der eine Messgeometrie, die ein räumliches Verhältnis zwischen der Vorrichtung zur Messung des Objekts und dem Objekt beschreibt, und/oder eine Einstelloption der Vorrichtung zur Messung des Objekts aufweisen kann. Die auf diese Weise ermittelten Messdaten werden auf geometrische Eigenschaften des Objekts ausgewertet.

Das Verfahren 100 dient zur Optimierung der Ermittlung der Messdaten des Objekts. Dazu wird in einem ersten Schritt 102 mindestens eine Messaufgabe für das Objekt ermittelt. Die Messaufgabe beschreibt dabei, welche Analysen auf den Messdaten durchgeführt werden sollen und welche Bereiche des Objekts analysiert werden sollen. Die Bereiche des Objekts weisen dabei geometrische Eigenschaften des Objekts an der Position der Bereiche auf.

In einem weiteren Schritt 104 wird der mindestens eine Aufnahmeparameter optimiert. Die Optimierung findet dabei für die mindestens eine Messaufgabe statt, die im Schritt 102 ermittelt wurde. D.h., dass die im Schritt 104 ermittelten Aufnahmeparameter auf die im Schritt 102 ermittelte Messaufgabe optimiert sind. Wenn Messdaten mittels des mindestens einen Aufnahmeparameters aus Schritt 104 ermittelt werden, passen diese Messdaten optimal zu der Messaufgabe, um mit hoher Effizienz eine Aussage über das Objekt in Bezug auf die durchzuführenden Analysen treffen zu können.

Der Schritt 104 kann die optionalen Unterschritte 110 und 112 aufweisen. Im Unterschritt 110 wird dabei ein Satz vordefinierter Messgeometrien bereitgestellt. Die Messgeometrien dienen dabei dazu, die relative Position der Vorrichtung zur Messung des Objekts und des Objekts zu beschreiben. Wenn verschiedene Messgeometrien verwendet werden, wird das Objekt unter unterschiedlichen Relativpositionen zu der Vorrichtung zur Messung des Objekts gemessen.

Aus dem Satz vordefinierter Messgeometrien wird im Unterschritt 112 eine Untermenge basierend auf der Messaufgabe ausgewählt. Die Untermenge des Satzes der vordefinierten Messgeometrien liefert dabei in Bezug auf die Messaufgabe optimale Messdaten, wenn diese Messgeometrien bei der Ermittlung der Messdaten durch die Vorrichtung zur Messung des Objekts verwendet werden.

Wenn die Messung eine durchstrahlende Messung ist, die beispielsweise mittels einer axialen Computertomographie durchgeführt wird, kann zunächst die axiale Computertomographie durchgeführt bzw. simuliert werden. Anhand der als Projektionen vorliegenden Messdaten kann dann die Optimierung durchgeführt werden, um zu ermitteln, welche Projektionen für die Messaufgabe überhaupt verwendet werden müssen. Da jede Projektion mit einer Messgeometrie verknüpft ist, die in diesem Fall eine Durchstrahlungsgeometrie ist, kann damit auf die zu verwendenden Messgeometrien geschlossen werden. Diese Auswahl von Messgeometrien kann für weitere Messungen verwendet werden. Während der Optimierung müssen keine weiteren Messdaten ermitteln werden bzw. simuliert werden, da nur eine Auswahl getroffen wird. Auf diese Weise wird der Suchraum für die auszuwählenden Messgeometrien extrem eingeschränkt, was die Durchführung der Optimierung erleichtert bzw. beschleunigt.

Der Schritt 104 kann alternativ oder zusätzlich weiter den optionalen Unterschritt 118 aufweisen, wenn die Messaufgabe mindestens eine Defektanalyse zur Ermittlung und Analyse von möglichen Defekten im Objekt umfasst. Die Messung ist dann eine durchstrahlende Messung, die auch das innere Volumen des Objekts erfasst. Dabei wird der mindestens eine zu optimierende Aufnahmeparameter geändert, bis in dem Objekt jeder Defekt erkannt wurde, der eine vordefinierte Mindestgröße aufweist. Die Erkennung muss dabei mit einer Wahrscheinlichkeit erfolgen, die innerhalb eines vordefinierten Wahrscheinlichkeitsintervalls für die Defekte liegt. Das Wahrscheinlichkeitsintervall kann dabei zum Beispiel so definiert sein, dass die Defekte mit einer Wahrscheinlichkeit von 70 % erkannt werden sollen. D.h. dann, dass bei 7 von 10 Analysen gleichartiger Messdaten, die Defekte erkannt werden müssen.

Der Schritt 104 weist weiter den Unterschritt 120 auf, wenn die Messaufgabe mindestens eine Defektanalyse zur Ermittlung und Analyse von möglichen Defekten im Objekt umfasst. Die Messung ist dann eine durchstrahlende Messung, die auch das innere Volumen des Objekts erfasst. In diesem Unterschritt wird der mindestens eine Aufnahmeparameter so lange geändert, bis geometrische Parameter der Defekte im Objekt mit einer vordefinierten Mindestgenauigkeit für Defekte ermittelt wurden. Die Ermittlung der vordefinierten Mindestgenauigkeit muss dabei mit einer Wahrscheinlichkeit erfolgen, die innerhalb eines vordefinierten Wahrscheinlichkeitsintervalls für die geometrischen Parameter liegt. So kann zum Beispiel für die geometrischen Parameter gefordert sein, dass die geometrischen Parameter mit einer Wahrscheinlichkeit von 90 % mit der Mindestgenauigkeit erkannt wurden. In diesem Fall müssen 9 von 10 Analysen gleichartiger Messdaten die geometrischen Parameter mit dieser Mindestgenauigkeit erkennen.

Weiterhin weist der Schritt 104 zusätzlich den Unterschritt 122 auf, bei dem der mindestens eine Aufnahmeparameter geändert wird, bis Grenzflächen im Objekt mit einer vordefinierten Mindestgenauigkeit für Grenzflächen ermittelt wurden. Die Ermittlung der Grenzflächen mit einer vordefinierten Mindestgenauigkeit muss dabei mit einer Wahrscheinlichkeit durchgeführt werden, die innerhalb eines vordefinierten Wahrscheinlichkeitsintervalls für Grenzflächen liegt. Das Wahrscheinlichkeitsintervall für Grenzflächen kann dabei beispielsweise so definiert sein, dass die Grenzflächen mit einer Wahrscheinlichkeit von 85 % mit der Mindestgenauigkeit erkannt werden. D.h., dass zum Beispiel bei 17 von 20 Analysen gleichartiger Messdaten die Position der Grenzfläche mit der Mindestgenauigkeit erkannt wurde. Weiter weist das Verfahren 100 den Schritt 106 auf, in welchem Messdaten für das Objekt ermittelt werden. Die Messdaten werden dabei unter Verwendung des mindestens einen optimierten Aufnahmeparameters ermittelt. Dies kann bedeuten, dass im Vergleich zu den nicht optimierten Aufnahmeparametern lediglich bestimmte Messgeometrien verwendet werden, um die Messdaten zu ermitteln.

Weiter kann das Verfahren 100 einen optionalen Schritt 114 aufweisen, in dem aus den im Schritt 106 ermittelten Messdaten eine digitale dreidimensionale Objektdarstellung ermittelt wird. Dies kann zum Beispiel dann erfolgen, wenn die Messdaten mittels einer durchstrahlenden Messung ermittelt wurden. Aus den als Durchstrahlungsbilder vorliegenden Messdaten, die in der Regel Projektionen des Objekts sind, können dann mittels tomographischer Berechnungen Volumendaten ermittelt werden.

In einem weiteren Schritt 108 kann die mindestens eine Messaufgabe für das Objekt auf Basis der ermittelten Messdaten aus Schritt 106 durchgeführt werden. Wenn das Verfahren 100 den optionalen Schritt 114 aufweist, weist der Schritt 108 den optionalen Unterschritt 116 auf. Im Unterschritt 116 wird die digitale Objektdarstellung auf Basis der Messaufgabe analysiert.

Mit dem mindestens einen optimierten Aufnahmeparameter kann die Anzahl der Messungen soweit reduziert werden, dass die Messaufgabe gerade so mit ausreichender Aussagekraft durchgeführt werden kann. Auf diese Weise kann die Zeit für die ansonsten zusätzlich anfallenden Messungen, mit denen die Aussagekraft der durchgeführten Messaufgabe lediglich unwesentlich oder nicht erhöht werden würde, gespart werden und die Messaufgabe inklusive der Ermittlung der Messdaten zeiteffizienter durchgeführt werden.

Nach dem Schritt 106 und in diesem Beispiel vor dem Schritt 108 kann das Verfahren 100 weiter den optionalen Schritt 124 aufweisen. In diesem optionalen Schritt wird das Auswerteverfahren, das in der Messaufgabe definiert wird, unter Verwendung von Messdaten optimiert, die mittels der Verwendung des mindestens einen optimierten Aufnahmeparameters ermittelt wurden. Der mindestens eine optimierte Aufnahmeparameter wird in diesem optionalen Schritt dazu verwendet, Messdaten zu ermitteln. Diese Messdaten sind aufgrund der Optimierung des mindestens einen Aufnahmeparameters von besserer Qualität als Messdaten, die ohne eine Optimierung des mindestens einen Aufnahmeparameters ermittelt wurden.

Diese Messdaten besserer Qualität werden dann dazu verwendet, das Auswerteverfahren zu optimieren.

In einem weiteren optionalen Schritt 126 kann das Verfahren 100 das Auswerteverfahren mit simulierten Messdaten optimieren. Die Simulation der Messdaten erfolgt dabei mittels des mindestens einen optimierten Aufnahmeparameters. Auch in diesem Fall werden optimalere Messdaten ermittelt als ohne Optimierung des Aufnahmeparameters. Auch diese Messdaten weisen damit eine höhere Qualität auf als die ohne Optimierung des Aufnahmeparameters ermittelten Messdaten. Sie können daher dazu verwendet werden, das Auswerteverfahren zu optimieren.

Sowohl im Schritt 124 als auch im Schritt 126 werden die mit dem mindestens einen optimierten Aufnahmeparameter ermittelten Messdaten als Trainingsdaten für die Optimierung des Auswerteverfahrens verwendet.

In einem weiteren optionalen Schritt 128 des Verfahrens 100 wird mittels der Trainingsdaten ein Wahrscheinlichkeitswert ermittelt. Dieser Wahrscheinlichkeitswert gibt an, ob das optimierte Auswerteverfahren einen Defekt einer definierten Größe identifiziert. D.h., es wird geprüft, ob das optimierte Auswerteverfahren eine Mindestanforderung für die Ermittlung von Defekten im Objekt erfüllt. Vorzugsweise ist die Messung, die für die Ermittlung der Messdaten verwendet wird, eine durchstrahlende Messung.

Das optimierte Auswerteverfahren kann in einem weiteren optionalen Schritt 130 des Verfahrens 100 dazu verwendet werden, den mindestens einen Aufnahmeparameter zu optimieren. D.h. das mit dem ursprünglichen mindestens einen Aufnahmeparameter optimierte Auswerteverfahren wird nun wiederum dazu verwendet, den mindestens einen Aufnahmeparameter zu optimieren. Dabei kann mindestens ein beliebiger Aufnahmeparameter optimiert werden. Dies kann der ursprünglich verwendete Aufnahmeparameter sein. Alternativ kann dies der bereits optimierte Aufnahmeparameter oder ein in diesem Verfahren 100 bisher nicht verwendeter Aufnahmeparameter sein. Da aufgrund des optimierten Auswerteverfahrens die ermittelten Messdaten weiter verbessert werden können, können auch die Aufnahmeparameter weiter optimiert werden, um gegebenenfalls die Anzahl der benötigten Messgeometrien für die Durchführung der Messaufgabe zu reduzieren.

Für die Optimierung der Aufnahmeparameter können simulierte oder reale Messdaten verwendet werden, die z. B. für die Optimierung des Auswertealgorithmus bereits zur Verfügung stehen und umgekehrt. Damit kann die Rechenzeit weiter reduziert werden.

In einem weiteren optionalen Schritt 132 kann nun wieder das Auswerteverfahren oder das optimierte Auswerteverfahren optimiert werden. Dabei werden Messdaten verwendet, die mittels des weiter optimierten Aufnahmeparameters ermittelt wurden. Dies führt zu einer weiteren Verbesserung des mindestens einen Aufnahmeparameters für die Vorrichtung zur Messung des Objekts in Bezug auf die durchzuführende Messaufgabe.

Um eine erfolgreiche Auswertung mit dem Auswerteverfahren durchführen zu können, wenn nur wenige Durchstrahlungsbilder vorliegen, kann Vorwissen über die Nominalgeometrie des Objekts in der Rekonstruktion, d. h. bei der Ermittlung der dreidimensionalen digitalen Objektdarstellung, verwendet werden. Ein z. B. iteratives Rekonstruktionsverfahren kann in diesem Beispiel schneller bzw. besser zu einem korrekten Ergebnis konvergieren. Weiter können aus einer Simulation einer Messung der Nominalgeometrie oder aus einer Mittelung von bereits durchgeführten Messungen von Objekten gleicher Nominalgeometrie eine Referenz erzeugt werden. Um eine Analyse, z. B. eine Defektanalyse, durchzuführen bzw. zu erleichtern, können die, zum Beispiel zwei- und/oder dreidimensionalen Messdaten des zu untersuchenden Messobjekts mit der Referenz verglichen werden.

Weiter kann das Auswerteverfahren berücksichtigten, welche Stelle im gemessenen Objekt gerade ausgewertet wird. Auf diese Weise kann Wissen über lokale Eigenschaften des Objekts hinsichtlich der Messgeometrie berücksichtigt werden. Dieses Wissen kann in einem Bereich beschreiben, dass dort mit höherem Rauschen zu rechnen ist, so dass bei der Identifizierung von Defekten ein konservatives Vorgehen verwendet werden soll, um fehlerhafte Identifizierungen zu vermeiden.

In einem weiteren optionalen Schritt 134 wird geprüft, ob eine vordefinierte Abbruchbedingung in Bezug auf die Optimierung der Auswerteverfahren erfüllt ist. Eine Abbruchbedingung kann zum Beispiel fordern, dass mit den optimierten Auswerteverfahren und den optimierten Aufnahmeparametern Messdaten in genügend kurzer Zeit ermittelt werden können, um eine Zeitersparnis zu erreichen, ohne Abstriche bei der Qualität der Auswertung zu machen. Eine Abbruchbedingung kann jedoch auch anders definiert sein.

Wenn die vordefinierte Abbruchbedingung erfüllt ist, kann mit dem Schritt 108 fortgefahren werden. Wenn die vordefinierte Abbruchbedingung nicht erfüllt ist, können in einem weiteren optionalen Schritt 136 des Verfahrens 100 die Schritte 130 und 132 so lange wiederholt werden, bis die vordefinierte Abbruchbedingung erfüllt ist. Auf diese Weise kann iterativ eine Optimierung der Auswerteverfahren und der Aufnahmeparameter durchgeführt werden.

Die in diesem Beispiel beschriebene Reihenfolge der Schritte kann beliebig, soweit vernünftig ausführbar, verändert werden.

Das computerimplementierte Verfahren 100 kann mittels eines Computerprogrammprodukts auf einem Computer ausgeführt werden. Das Computerprogrammprodukt weist dabei auf einem Computer ausführbaren Instruktionen auf. Wenn diese Instruktionen auf einem Computer ausgeführt werden, veranlassen sie den Computer dazu, das Verfahren durchzuführen.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Computerimplementiertes Verfahren zur Optimierung einer Ermittlung von Messdaten eines Objekts, wobei die Messdaten auf zu analysierende geometrische Eigenschaften des Objekts ausgewertet werden, wobei die Messdaten mittels einer Messung des Objekts unter Verwendung mindestens eines Aufnahmeparameters ermittelt werden, wobei der mindestens eine Aufnahmeparameter mindestens eine Messgeometrie und/oder mindestens eine Einstelloptionen für die Messung umfasst, wobei das Verfahren (100) die folgenden Schritte aufweist:
- Ermitteln (102) mindestens einer Messaufgabe für das Objekt, wobei die Messaufgabe mittels eines Auswerteverfahrens durchgeführt wird und die zu analysierenden geometrischen Eigenschaften des Objekts festlegt;
- Optimieren (104) des mindestens einen Aufnahmeparameters für die mindestens eine Messaufgabe zur Optimierung der Ermittlung von Messdaten;
- Ermitteln (106) der Messdaten für das Objekt mittels einer Messung unter Verwendung des mindestens einen optimierten Aufnahmeparameters; und
- Durchführen (108) der mindestens einen Messaufgabe für das Objekt auf Basis der ermittelten Messdaten,
wobei, gemäss einem ersten Ansatz die Messaufgabe mindestens eine Defektanalyse zur Ermittlung und Analyse von möglichen Defekten im Objekt umfasst, wobei die Messung eine durchstrahlende Messung ist, und wobei der Schritt Optimieren (104) des mindestens einen Aufnahmeparameters für die mindestens eine Messaufgabe weiter mindestens einen der nachfolgenden Unterschritte aufweist:
- Ändern (118) des mindestens einen Aufnahmeparameters bis jeder Defekt im Objekt, der eine vordefinierte Mindestgröße aufweist, mit einer Wahrscheinlichkeit erkannt wird, die innerhalb eines vordefinierten Wahrscheinlichkeitsintervalls für Defekte liegt;
- Ändern (120) des mindestens einen Aufnahmeparameters bis geometrische Parameter der Defekte im Objekt mit einer Wahrscheinlichkeit, die innerhalb eines vordefinierten Wahrscheinlichkeitsintervalls für geometrische Parameter liegt, mit einer vordefinierten Mindestgenauigkeit für Defekte ermittelt werden,
oder, alternativ zu dem ersten Ansatz in einem zweiten Ansatz, die Messaufgabe mindestens eine Bestimmung einer Grenzfläche des Objekts aufweist, und wobei der Schritt Optimieren (104) des mindestens einen Aufnahmeparameters für die mindestens eine Messaufgabe weiter den nachfolgenden Unterschritt aufweist:
- Ändern (122) des mindestens einen Aufnahmeparameters bis Grenzflächen im Objekt mit einer Wahrscheinlichkeit, die innerhalb eines vordefinierten Wahrscheinlichkeitsintervalls für Grenzflächen liegt, mit einer vordefinierten Mindestgenauigkeit für die Grenzflächen ermittelt werden.

2. Verfahren nach Anspruch 1, **dadurch gekennzeichnet, dass** der Schritt Optimieren (104) des mindestens einen Aufnahmeparameters für die mindestens eine Messaufgabe weiter den folgenden Unterschritt aufweist:
- Bereitstellen (110) eines Satzes vordefinierter Messgeometrien;
- Auswählen (112) einer Untermenge des Satzes vordefinierter Messgeometrien basierend auf der Messaufgabe.

3. Verfahren nach Anspruch 1 oder 2, **dadurch gekennzeichnet, dass** das Verfahren (100) nach dem Schritt Ermitteln (106) der Messdaten für das Objekt weiter den nachfolgenden Schritt aufweist:
- Ermitteln (114) einer digitalen dreidimensionalen Objektdarstellung aus den Messdaten;
wobei der Schritt Durchführen (108) der mindestens einen Messaufgabe den nachfolgenden Unterschritt aufweist:
- Analysieren (116) der digitalen Objektdarstellung auf Basis der Messaufgabe.

4. Verfahren nach einem der Ansprüche 1 bis 3, **dadurch gekennzeichnet, dass** der Schritt Optimieren (104) des mindestens einen Aufnahmeparameters mittels mindestens einer simulierten durchstrahlenden Messung des Objekts durchgeführt wird.

5. Verfahren nach einem der Ansprüche 1 bis 4, **dadurch gekennzeichnet, dass** das Verfahren (100) weiter den folgenden Schritt aufweist:
- Optimieren (130) des mindestens einen Aufnahmeparameters oder des mindestens einen optimierten Aufnahmeparameters basierend auf dem optimierten Auswerteverfahren, wobei ein weiter optimierter Aufnahmeparameter resultiert.

6. Verfahren nach Anspruch 5, **dadurch gekennzeichnet, dass** das Verfahren (100) nach dem Schritt Optimieren (130) des mindestens einen Aufnahmeparameters basierend auf dem optimierten Auswerteverfahren weiter den folgenden Schritt aufweist:
- Optimieren (132) des Auswerteverfahrens oder des optimierten Auswerteverfahrens unter Verwendung von Messdaten, die mittels des mindestens einen weiter optimierten Aufnahmeparameters aus Schritt (130) ermittelt wurden, zum Ermitteln eines weiter optimierten Auswerteverfahrens.

7. Verfahren nach Anspruch 6, **dadurch gekennzeichnet, dass** das Verfahren (100) nach dem Schritt Optimieren (132) des Auswerteverfahrens oder des optimierten Auswerteverfahrens unter Verwendung des mindestens einen optimierten Aufnahmeparameters zum Ermitteln eines weiter optimierten Auswerteverfahrens weiter den folgenden Schritt aufweist:
- Prüfen (134), ob eine vordefinierte Abbruchbedingung erfüllt ist;
Wenn die vordefinierte Abbruchbedingung nicht erfüllt ist:
- Wiederholen (136) der Schritte Optimieren (130) des mindestens einen Aufnahmeparameters basierend auf dem optimierten Auswerteverfahren und Optimieren (132) des Auswerteverfahrens oder des optimierten Auswerteverfahrens unter Verwendung von Messdaten, die mittels des mindestens einen optimierten Aufnahmeparameters ermittelt wurden, zum Ermitteln eines weiter optimierten Auswerteverfahrens bis eine vordefinierte Abbruchbedingung erfüllt ist.

8. Computerprogrammprodukt mit auf einem Computer ausführbaren Instruktionen, die auf einem Computer ausgeführt, den Computer dazu veranlassen, das Verfahren nach einem der vorhergehenden Ansprüche durchzuführen.

## Claims

1. Computer-implemented method for optimizing a determining of measurement data of an object, wherein the measurement data are evaluated for geometric properties of the object to be analysed, wherein the measurement data are determined by way of a measurement of the object using at least one recording parameter, wherein the at least one recording parameter comprises at least one measurement geometry and/or at least one setting option for the measurement, wherein the method (100) includes the following steps:
- determining (102) at least one measuring task for the object, wherein the measuring task is carried out by way of an evaluation method and defines the geometric properties of the object to be analysed;
- optimizing (104) the at least one recording parameter for the at least one measuring task to optimize the determination of measurement data;
- determining (106) the measurement data for the object by way of a measurement using the at least one optimized recording parameter; and
- carrying out (108) the at least one measuring task for the object on the basis of the determined measurement data,
wherein, according to a first approach, the measuring task comprises at least one defect analysis to determine and analyse possible defects in the object, wherein the measurement is a radiographic measurement, and wherein the step of optimizing (104) the at least one recording parameter for the at least one measuring task furthermore includes at least one of the following sub-steps:
- changing (118) the at least one recording parameter until every defect in the object which has a predefined minimum size is detected at a probability which is within a predefined probability interval for defects;
- changing (120) the at least one recording parameter until geometric parameters of the defects in the object are determined at a probability which is within a predefined probability interval for geometric parameters, with a predefined minimum accuracy for defects,
or, as an alternative to the first approach in a second approach, the measuring task includes at least one determination of a boundary surface of the object, and wherein the step of optimizing (104) the at least one recording parameter for the at least one measuring task furthermore includes the following sub-step:
- changing (122) the at least one recording parameter until boundary surfaces in the object are determined at a probability which is within a predefined probability interval for boundary surfaces, with a predefined minimum accuracy for the boundary surfaces.

2. Method according to Claim 1, **characterized in that** the step of optimizing (104) the at least one recording parameter for the at least one measuring task furthermore includes the following sub-step:
- providing (110) a set of predefined measurement geometries;
- selecting (112) a subset of the set of predefined measurement geometries on the basis of the measuring task.

3. Method according to Claim 1 or 2, **characterized in that** the method (100), after the step of determining (106) the measurement data for the object, furthermore includes the following step:
- determining (114) a digital three-dimensional object representation from the measurement data;
wherein the step of carrying out (108) the at least one measuring task includes the following sub-step:
- analysing (116) the digital object representation on the basis of the measuring task.

4. Method according to any of Claims 1 to 3, **characterized in that** the step of optimizing (104) the at least one recording parameter is carried out by way of at least one simulated radiographic measurement of the object.

5. Method according to any of Claims 1 to 4, **characterized in that** the method (100) furthermore includes the following step:
- optimizing (130) the at least one recording parameter or the at least one optimized recording parameter on the basis of the optimized evaluation method, wherein a further optimized recording parameter results.

6. Method according to Claim 5, **characterized in that** the method (100), after the step of optimizing (130) the at least one recording parameter on the basis of the optimized evaluation method, furthermore includes the following step:
- optimizing (132) the evaluation method or the optimized evaluation method using measurement data, which were determined by way of the at least one further optimized recording parameter from step (130), to determine a further optimized evaluation method.

7. Method according to Claim 6, **characterized in that** the method (100), after the step of optimizing (132) the evaluation method or the optimized evaluation method using the at least one optimized recording parameter to determine a further optimized evaluation method, furthermore includes the following step:
- checking (134) whether a predefined abort condition is met;
if the predefined abort condition is not met:
- repeating (136) the steps of optimizing (130) the at least one recording parameter on the basis of the optimized evaluation method and optimizing (132) the evaluation method or the optimized evaluation method using measurement data, which were determined by way of the at least one optimized recording parameter, to determine a further optimized evaluation method until a predefined abort condition is met.

8. Computer program product having instructions executable on a computer which, when executed on a computer, prompt the computer to carry out the method according to any of the preceding claims.

## Revendications

1. Procédé mis en œuvre par ordinateur pour optimiser une détermination de données de mesure d'un objet, les données de mesure étant évaluées en ce qui concerne des propriétés géométriques à analyser de l'objet, les données de mesure étant déterminées au moyen d'une mesure de l'objet à l'aide d'au moins un paramètre d'acquisition ; ledit au moins un paramètre d'acquisition comprenant au moins une géométrie de mesure et/ou au moins une option de réglage pour la mesure, le procédé (100) comprenant les étapes suivantes :
- détermination (102) d'au moins une tâche de mesure pour l'objet, la tâche de mesure étant exécutée au moyen d'un procédé d'évaluation et définissant les propriétés géométriques à analyser de l'objet ;
- optimisation (104) dudit au moins un paramètre d'acquisition pour ladite au moins une tâche de mesure pour optimiser la détermination des données de mesure ;
- détermination (106) des données de mesure pour l'objet au moyen d'une mesure à l'aide dudit au moins un paramètre d'acquisition optimisé ; et
- exécution (108) de ladite au moins une tâche de mesure pour l'objet sur la base des données de mesure déterminées,
dans lequel, selon une première approche, la tâche de mesure comprend au moins une analyse de défauts pour déterminer et analyser des défauts possibles dans l'objet, la mesure étant une mesure en transmission, et l'étape d'optimisation (104) dudit au moins un paramètre d'acquisition pour ladite au moins une tâche de mesure comportant au moins l'une des sous-étapes suivantes :
- modification (118) dudit au moins un paramètre d'acquisition au moins jusqu'à ce que tout défaut dans l'objet ayant une taille minimale prédéfinie soit détecté avec une probabilité se situant dans un intervalle de probabilité prédéfini pour les défauts ;
- modification (120) dudit au moins un paramètre d'acquisition jusqu'à ce que les paramètres géométriques des défauts dans l'objet soient déterminés avec une probabilité se situant dans un intervalle de probabilité prédéfini pour des paramètres géométriques, avec une précision minimale prédéfinie pour les défauts,
ou, en variante à la première approche, selon une deuxième approche, la tâche de mesure comporte au moins une détermination d'une interface de l'objet, et l'étape d'optimisation (104) dudit au moins un paramètre d'acquisition pour ladite au moins une tâche de mesure comportant la sous-étape suivante :
- modification (122) dudit au moins un paramètre d'acquisition jusqu'à ce que les interfaces de l'objet soient déterminées avec une probabilité se situant dans un intervalle de probabilité prédéfini pour des interfaces, avec une précision minimale prédéfinie pour les interfaces.

2. Procédé selon la revendication 1, **caractérisé en ce que** l'étape d'optimisation (104) dudit au moins un paramètre d'acquisition pour ladite au moins une tâche de mesure comporte la sous-étape suivante :
- fourniture (110) d'un ensemble de géométries de mesure prédéfinies ;
- sélection (112) d'un sous-ensemble de géométries de mesure prédéfinies sur la base de la tâche de mesure.

3. Procédé selon la revendication 1 ou 2, **caractérisé en ce que** le procédé (100), après l'étape détermination (106) des données de mesure pour l'objet, comporte l'étape suivante :
- détermination (114) d'une représentation d'objet numérique tridimensionnelle à partir des données de mesure ;
l'étape d'exécution (108) de ladite au moins une tâche de mesure comportant la sous-étape suivante :
- analyse (116) de la représentation d'objet numérique sur la base de la tâche de mesure.

4. Procédé selon l'une quelconque des revendications 1 à 3, **caractérisé en ce que** l'étape d'optimisation (104) dudit au moins un paramètre d'acquisition est exécutée au moyen d'au moins une mesure en transmission simulée de l'objet.

5. Procédé selon l'une quelconque des revendications 1 à 4, **caractérisé en ce que** le procédé (100) comprend en outre l'étape suivante :
- optimisation (130) dudit au moins un paramètre d'acquisition ou dudit au moins un paramètre d'acquisition optimisé sur la base du procédé d'évaluation optimisé, ce qui donne lieu à un paramètre d'acquisition encore plus optimisé.

6. Procédé selon la revendication 5, **caractérisé en ce que** le procédé (100), après l'étape d'optimisation (130) dudit au moins un paramètre d'acquisition sur la base du procédé d'évaluation optimisé comporte en outre l'étape suivante :
- optimisation (132) du procédé d'évaluation ou du procédé d'évaluation optimisé à l'aide de données de mesure déterminées au moyen dudit au moins un paramètre d'acquisition encore plus optimisé résultant de l'étape (130) pour déterminer un procédé d'évaluation encore plus optimisé.

7. Procédé selon la revendication 6, **caractérisé en ce que** le procédé (100), après l'étape d'optimisation (132) du procédé d'évaluation ou du procédé d'évaluation optimisé à l'aide dudit au moins un paramètre d'acquisition optimisé pour déterminer un procédé d'évaluation encore plus optimisé, comporte en outre l'étape suivante :
- vérification (134) du fait de savoir si une condition d'interruption prédéfinie est satisfaite ;
si la condition d'interruption prédéfinie n'est pas satisfaite :
- répétition (136) des étapes d'optimisation (130) dudit au moins un paramètre d'acquisition sur la base du procédé d'évaluation optimisé et optimisation (132) du procédé d'évaluation ou du procédé d'évaluation optimisé à l'aide de données de mesure déterminées au moyen dudit au moins un paramètre d'acquisition optimisé pour déterminer un procédé d'évaluation encore plus optimisé jusqu'à ce qu'une condition d'interruption prédéfinie soit satisfaite.

8. Produit de programme informatique comprenant des instructions exécutables sur un ordinateur qui, lorsqu'elles sont exécutées sur un ordinateur, font que l'ordinateur met en œuvre le procédé selon l'une quelconque des revendications précédentes.
